(19) Europäisches Patentamt / European Patent Office / Office européen des brevets

(11) **EP 2 935 828 B1**

(12) **FASCICULE DE BREVET EUROPEEN**

(45) Date de publication et mention de la délivrance du brevet:
**08.02.2017 Bulletin 2017/06**

(21) Numéro de dépôt: **13802995.4**

(22) Date de dépôt: **12.12.2013**

(51) Int Cl.:
*F02B 37/12* (2006.01)     *F02B 37/18* (2006.01)
*F02B 39/16* (2006.01)

(86) Numéro de dépôt international:
**PCT/EP2013/076309**

(87) Numéro de publication internationale:
**WO 2014/095544 (26.06.2014 Gazette 2014/26)**

(54) **PROCEDE DE DIAGNOSTIC D'UN MOTEUR SURALIMENTE ET MOTEUR ASSOCIE**

DIAGNOSEVERFAHREN FÜR AUFGELADENEN MOTOR UND ZUGEHÖRIGER MOTOR

SUPERCHARGED ENGINE DIAGNOSTICS METHOD AND ASSOCIATED ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2012 FR 1262453**

(43) Date de publication de la demande:
**28.10.2015 Bulletin 2015/44**

(73) Titulaire: **Renault S.A.S.**
**92100 Boulogne-Billancourt (FR)**

(72) Inventeurs:
• **PAILLARD, Jérôme**
  **F-91660 Mereville (FR)**
• **AVONS, Vincent-Pierre**
  **F-75014 Paris (FR)**

(56) Documents cités:
**EP-A1- 1 310 652     EP-A1- 2 314 847**
**WO-A1-02/29229     FR-A1- 2 944 055**
**US-A- 4 672 814**

# Description

## DOMAINE TECHNIQUE DE L'INVENTION

L'invention concerne un procédé de diagnostic embarqué d'un moteur à combustion interne suralimenté, notamment de véhicule automobile, équipé d'un turbocompresseur à géométrie fixe et d'une vanne de décharge à l'échappement. Elle concerne également un moteur apte à la mise en oeuvre d'un tel procédé.

## ETAT DE LA TECHNIQUE

La suralimentation permet d'augmenter les performances d'un moteur en admettant, pour la combustion du carburant, un débit massique d'air plus élevé que dans un moteur atmosphérique de cylindrée équivalente. Un dispositif de suralimentation d'un moteur peut par exemple comprendre un turbocompresseur, comportant d'une part un compresseur qui alimente le moteur en air à une pression supérieure à la pression atmosphérique, et d'autre part une turbine traversée par tout ou partie des gaz d'échappement du moteur. La puissance fournie à la turbine par la détente des gaz traversant la turbine est transmise, par l'intermédiaire d'un arbre, au compresseur qui comprime l'air aspiré de l'atmosphère extérieure, à une pression dite pression de suralimentation.

De nombreux moteurs, notamment les moteurs à essence, sont équipés d'un turbocompresseur à géométrie fixe (également connu sous l'acronyme : TGF), c'est-à-dire dont la turbine présente des ailettes non-orientables. La turbine du turbocompresseur est associée à une vanne de décharge à l'échappement, dite aussi vanne « waste-gate » selon la terminologie anglaise, dont le degré d'ouverture permet de régler la proportion des gaz d'échappement du moteur qui traverse la turbine, et ainsi de moduler la puissance prélevée aux gaz d'échappement par la turbine et d'ajuster la pression de suralimentation.

On connaît de l'état de la technique plusieurs procédés de diagnostic qui visent à évaluer le fonctionnement de la suralimentation dans un moteur, par exemple de véhicule automobile, de manière à limiter les performances du moteur et/ou à alerter le conducteur de la nécessité d'une réparation ou du dépassement d'un niveau légal d'émissions polluantes lié à un manque de compression. Par exemple, la publication FR-B1-2923262 divulgue un procédé de détection d'une avarie dans un dispositif de suralimentation en air, basé sur la mesure en continu de la pression des gaz en amont d'une turbine, et consistant à :

- vérifier que le moteur se trouve dans un état de régulation dans lequel le turbocompresseur est commandé grâce à la pression avant turbine $P_{avt}$ :
- mesurer périodiquement cette pression avant turbine $P_{avt}$ ;
- pour chaque mesure, calculer une valeur $\Delta P_{avt} = P_{avt}$ - $P_{avt\_}$, dans laquelle $P_{avt\_}$ est une valeur de consigne de la pression avant turbine ;
- si $\Delta P_{avt}$ est supérieure ou égale à zéro, lui retrancher une valeur prédéterminée dite de « bande morte » BM et garder les valeurs positives, sinon remplacer par zéro ;
- calculer une intégrale temporelle I de l'écart de boucle de pression selon l'équation : $I = \int |P_{avt} - P_{avt\_}| \cdot dt$ ;
- si I est supérieure à un seuil prédéterminé, diagnostiquer un état de défaillance.

Les procédés de diagnostic connus manquent néanmoins de précision. La plupart ne sont utilisables que lorsque la pression de suralimentation est régulée en boucle fermée par l'ouverture d'une vanne waste-gate pour répondre à une consigne de couple émise par le conducteur. Mais une telle régulation en boucle fermée n'est pas toujours utilisée ; en particulier, la zone de points de fonctionnement régime-charge du moteur pendant le cycle d'homologation européen NEDC, dans lequel les émissions polluantes du moteur d'un véhicule automobile sont calculées, recouvre essentiellement une zone de points de fonctionnement dans laquelle la suralimentation est, au contraire, régulée en boucle ouverte. Les procédés connus, par exemple le procédé décrit précédemment, ne permettent pas de répondre aux exigences de la norme européenne dite « OBD euro6 » qui impose à tout véhicule un diagnostic de suralimentation sur le cycle NEDC.

## RESUME DE L'INVENTION

L'invention propose de remédier aux défauts des procédés de diagnostic connus. Elle propose pour cela un procédé de diagnostic d'un moteur à combustion interne suralimenté équipé d'un turbocompresseur à géométrie fixe, comprenant un compresseur traversé par l'air admis dans le circuit d'admission du moteur, et une turbine liée en rotation au compresseur par un arbre commun et traversée par des gaz d'échappement du moteur dans le circuit d'échappement du moteur, ledit moteur étant associé à :

- un boîtier-papillon pour faire varier la section de passage de l'air admis dans le circuit d'admission du moteur ; et
- une vanne waste-gate montée en parallèle de la turbine dans le circuit d'échappement du moteur pour faire varier la proportion des gaz d'échappement du moteur traversant la turbine,

caractérisé en ce qu'il comporte :

- une étape de calcul d'une première intégrale temporelle d'une mesure de la pression atmosphérique pendant une durée de calcul ;
- une étape de calcul d'une intégrale temporelle d'une mesure de la pression de suralimentation pendant ladite durée de calcul ;

- une étape de calcul d'une seconde intégrale temporelle d'une mesure de la pression atmosphérique pendant ladite durée de calcul ;
- une étape de calcul de deux critères de diagnostic dépendant de la première intégrale temporelle de la pression atmosphérique, de l'intégrale temporelle de la pression de suralimentation et de la seconde intégrale temporelle de la pression atmosphérique ;
- une étape de comparaison du premier critère de diagnostic avec un premier seuil de diagnostic, et de comparaison du second critère de diagnostic avec un second seuil de diagnostic ; et
- une étape de diagnostic de défaillance, quand un des deux critères de diagnostic au moins est inférieur à son seuil de diagnostic associé.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 est une représentation schématique d'un moteur à combustion interne apte à la mise en oeuvre du procédé selon l'invention ;
- la figure 2 illustre différents modes de régulation de la suralimentation dans un moteur en fonction du régime du moteur et de la pression de l'air dans un collecteur d'admission du moteur ; et
- la figure 3 est une représentation schématique des étapes du procédé de diagnostic d'un moteur suralimenté selon l'invention.

DESCRIPTION DETAILLEE DES FIGURES

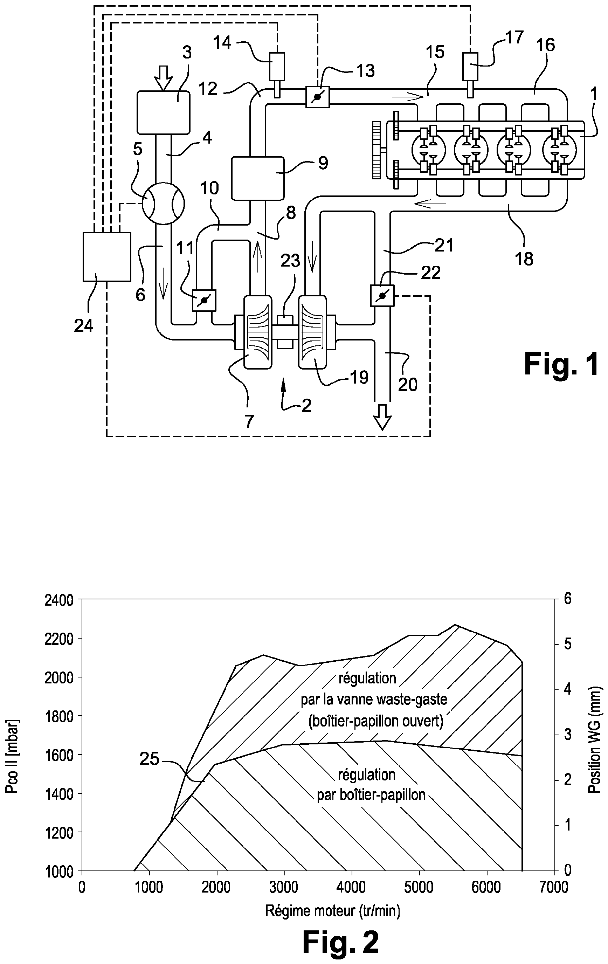

La figure 1 représente schématiquement un moteur à combustion interne 1, monté par exemple sur un véhicule automobile (non-représenté), équipé d'un turbocompresseur 2 à géométrie fixe, et associé à un certain nombre de pièces composant le circuit d'admission d'air du moteur 1 et le circuit d'échappement des gaz brûlés du moteur 1.

Le circuit d'admission d'air comporte un filtre à air 3, un premier tuyau d'air 4, dit tuyau de liaison filtre-débitmètre, qui relie le filtre à air 3 à un débitmètre 5 qui mesure le débit massique d'air Q aspiré dans l'atmosphère extérieure. Un deuxième tuyau d'air 6, dit tuyau de liaison débitmètre-turbocompresseur, relie le débitmètre 5 à l'entrée du compresseur 7 du turbocompresseur 2. La sortie du compresseur 7 est reliée à une extrémité d'un troisième tuyau 8, dit tuyau de liaison turbocompresseur-refroidisseur. L'autre extrémité de ce troisième tuyau 8 est relié à l'entrée d'un refroidisseur d'air suralimenté 9, connu aussi sous l'acronyme RAS (d'après les majuscules de l'expression : Refroidisseur d'Air Suralimenté). Un tuyau de décharge à l'admission 10, sur lequel est montée une vanne de décharge à l'admission 11, dite aussi vanne pop-off 11 d'après sa dénomination anglaise, est montée en parallèle du compresseur 7. Plus précisément une de ses extrémités prend naissance dans le deuxième tuyau 6 et l'autre extrémité débouche dans le troisième tuyau 8.

Un quatrième tuyau 12, dit tuyau de liaison RAS-boîtier papillon, relie le RAS 9 à l'entrée d'un boîtier papillon 13. Il est équipé d'un capteur de pression de suralimentation 14, apte à mesurer la pression de suralimentation $P_{sural}$ de l'air. La sortie du boîtier-papillon est reliée à une extrémité d'un cinquième tuyau 15, dit tuyau de liaison boîtier papillon - moteur, dont l'autre extrémité est reliée à un collecteur d'admission 16 du moteur 1. Le collecteur d'admission 16 est équipé d'un capteur de pression d'air 17 apte à mesurer la pression de l'air dans le collecteur d'admission $P_{coll}$, c'est-à-dire la pression de l'air entrant dans le moteur 1.

Classiquement, le moteur 1 comporte un carter-cylindres délimitant une pluralité de cylindres (au nombre de quatre sur la figure 1), une culasse délimitant une pluralité de chambres de combustion associées à un conduit d'admission, à au moins une soupape d'admission, à des moyens d'injection de carburant, par exemple un injecteur d'essence, à au moins une soupape d'échappement et à un conduit d'échappement des gaz brûlés.

Le circuit d'échappement des gaz brûlés du moteur 1 comprend un collecteur d'échappement 18 qui relie la sortie du moteur 1 à l'entrée de la turbine 19 du turbocompresseur 2. La sortie de la turbine 19 est reliée à une extrémité d'un tuyau d'échappement 20 des gaz brûlés, qui peut comprendre divers dispositifs de traitement des émissions polluantes des gaz d'échappement du moteur (non-représentés sur la figure 1).

Un tuyau de décharge à l'échappement 21, sur lequel est montée une vanne de décharge à l'échappement 22, dite aussi vanne waste-gate d'après sa dénomination anglaise, est montée en parallèle de la turbine 19 dans le circuit d'échappement du moteur 1. Plus précisément une de ses extrémités prend naissance à la sortie du collecteur d'échappement 18 et l'autre extrémité débouche dans le tuyau d'échappement 20.

Le turbocompresseur 2, qui est ici à géométrie fixe, c'est-à-dire avec des ailettes de turbine 19 à orientation fixe, comprend le compresseur 7, qui fait partie du circuit d'admission d'air du moteur 1, et la turbine 19, qui fait partie du circuit d'échappement du moteur 1. Le turbocompresseur 2 comprend un arbre 23 auquel le compresseur 7 et la turbine 19 sont liés en rotation.

Le turbocompresseur est associé, dans le circuit d'admission du moteur 1, à la vanne pop-off 11 et à la vanne waste-gate 22. Ces deux vannes 11,22 sont avantageusement assemblées sur le turbocompresseur 2.

D'une manière connue en soi, le mode de fonctionnement du moteur 1 est le suivant : De l'air provenant de l'extérieur du véhicule, à la pression atmosphérique $P_{atmo}$, parcourt le circuit d'admission du moteur 1 dans le sens des flèches. Il est filtré dans le filtre à air 3, puis le débit massique d'air Q est mesuré par le débitmètre 5.

En variante non-représentée, sans sortir du cadre de l'invention, le débit massique d'air Q peut être également déterminé comme égal à la différence entre le débit massique des gaz d'échappement $Q_{ech}$ (mesuré par un débitmètre à l'échappement) et du débit massique de carburant $Q_{carb}$ injecté dans le moteur pour la combustion dans les cylindres du moteur 1, par un principe de conservation de masse. Il peut aussi être déterminé par une cartographie du moteur 1, par exemple en fonction d'un ensemble de paramètres comprenant au moins la pression de l'air dans le collecteur d'admission $P_{coll}$, le régime N du moteur et une valeur représentative de l'ouverture $\alpha$ du boîtier-papillon 13, auquel cas aucun débitmètre 5 n'est nécessaire à la détermination du débit massique d'air Q.

L'air est compressé par le compresseur 7. On suppose ici et dans toute la suite de la description que la vanne pop-off 11 est complètement fermée, c'est-à-dire que la totalité de l'air traversant le compresseur 7 entre ensuite dans le RAS 9. L'air comprimé est ensuite refroidi dans le RAS 9, puis admis dans les chambres de combustion du moteur 1 via le collecteur d'admission 16.

En fonction du régime N et d'une consigne de couple C traduisant le besoin en couple moteur, lié notamment à l'enfoncement de la pédale d'accélération (non-représentée) du véhicule par le conducteur et à différents actionneurs (non-représentés) tels qu'un compresseur de climatisation ou un alternateur du moteur 1, un calculateur 24 du moteur, qui est relié à un ensemble de capteurs et d'actionneurs comprenant au moins :

- le débitmètre 5 ;
- le boîtier papillon 13 ;
- le capteur de pression de suralimentation 14 ;
- le capteur de pression d'air 17 dans le collecteur d'admission 16 ; et
- la vanne waste-gate 22,

détermine d'une part un débit massique d'air Q, et d'autre part un débit massique de carburant $Q_{carb}$ à injecter dans le moteur 1, qui peut être le plus souvent dans les proportions stoechiométriques, dans le cas d'un moteur 1 à essence.

Le débit massique d'air Q est traduit en une consigne d'ouverture a de boîtier-papillon 13 et en une consigne de pression de collecteur d'admission $P_{coll}$. Théoriquement, un débit massique d'air Q donné (mesuré en kg/s) peut être obtenu par différents choix de consigne d'ouverture $\alpha$ de boîtier-papillon 13 et de consigne d'ouverture de la vanne waste-gate 22 : La première consigne permet de régler la section de passage de l'air admis dans le circuit d'admission, c'est-à-dire de jouer sur son débit volumique (mesuré en $m^3/s$). La seconde consigne permet de régler la proportion des gaz d'échappement du moteur 1 qui traverse la turbine, en by-passant une partie des gaz d'échappement du moteur 1 par la vanne waste-gate 22 qui est montée en parallèle de la turbine 19 dans le circuit d'échappement du moteur 1. On module ainsi la puissance prélevée aux gaz d'échappement par la turbine 19, ce qui permet d'ajuster la pression de suralimentation $P_{sural}$, c'est-à-dire de jouer sur la densité de l'air admis (mesurée en $kg/m^3$).

Pour simplifier le pilotage du moteur 1, la régulation de la pression de l'air dans le collecteur d'admission $P_{coll}$ est réalisée en n'agissant que sur un seul actionneur à la fois parmi le boîtier-papillon 13 et la vanne waste-gate 22, comme l'illustre la figure 2.

Sur la figure 2, on a représenté deux modes de régulation de la pression de collecteur d'admission $P_{coll}$. L'axe des abscisses représente le régime de rotation N du moteur et l'axe des ordonnées représente la pression d'air régnant dans le collecteur d'admission $P_{coll}$ mesurée par le capteur de pression d'air 17.

Pour des besoins en couple C du moteur 1 relativement faibles, c'est-à-dire pour des valeurs de pression de collecteur d'admission $P_{coll}$ peu élevées, inférieures à un seuil de pression qui est une fonction du régime N représentée par la courbe 25, le moteur est dans un mode de régulation de la suralimentation dit « suralimentation naturelle » qui correspond aux deux conditions suivantes :

- La vanne waste-gate 22 est complètement fermée, c'est-à-dire que la totalité du débit de gaz d'échappement $Q_{ech}$ sortant du moteur 1 traverse la turbine 19 et fournit à celle-ci une énergie de détente qui est transmise au compresseur 2 par l'arbre 23 pour la compression du débit d'air Q.
- La pression d'air dans le collecteur d'admission $P_{coll}$ est régulée en boucle ouverte sur une consigne de pression par le calculateur 24, en agissant sur la valeur d'ouverture a du boîtier-papillon 13. La pression de suralimentation $P_{sural}$ n'est pas régulée directement, mais elle est la résultante de l'ouverture a du boîtier-papillon 13 et de la pression d'air dans le collecteur d'admission $P_{coll}$.

Pour des besoins en couple C du moteur 1 relativement élevés, c'est-à-dire pour des valeurs de pression de collecteur d'admission $P_{coll}$ importantes, supérieures au seuil de pression dépendant du régime N qui est représenté par la courbe 25, le moteur est dans un mode de régulation de la suralimentation dit « régulation en boucle fermée ».

Le boîtier-papillon 13 est complètement ouvert, c'est-à-dire que la section de passage et le débit volumique de l'air admis sont maximaux. La pression de l'air dans le collecteur d'admission $P_{coll}$ se confond avec la pression de suralimentation $P_{sural}$. La pression de l'air dans le collecteur d'admission $P_{coll}$ est régulée en boucle fermée sur une consigne de pression par le calculateur 24, en agissant sur l'ouverture de la vanne waste-gate 22.

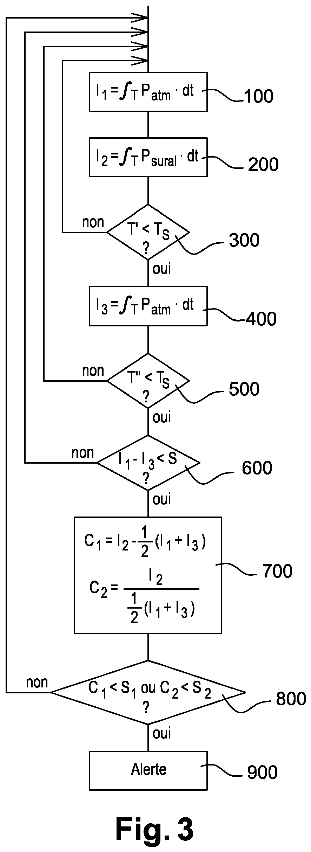

Sur la figure 3, on a représenté les étapes du procédé de diagnostic d'un moteur suralimenté 1 selon l'invention.

Le procédé comporte une étape 100 de calcul d'une première intégrale temporelle $I_1$ de la pression atmosphérique $P_{atm}$, pendant une durée de calcul T, selon l'équation :

$$I_1 = \int_T P_{atm} * dt$$

Cette étape 100 commence quand le calculateur 24 détermine que le débit massique Q d'air (mesuré par le débitmètre 5) est inférieur à un premier seuil de débit $Q_1$, en dessous duquel le turbocompresseur 2 ne permet quasiment pas de comprimer l'air admis, l'énergie cédée à la turbine 19 par les gaz d'échappement étant négligeable. La pression atmosphérique $P_{atm}$ est assimilée à la pression de suralimentation $P_{sural}$, les pertes de charge dans le circuit d'admission du moteur, en particulier dans le filtre à air 3 et dans le refroidisseur d'air suralimenté 9, étant négligeables. La pression atmosphérique $P_{atm}$ est ainsi avantageusement déterminée par le capteur de pression de suralimentation 14.

L'intégration de la pression atmosphérique $P_{atm}$ se poursuit tant que le débit massique d'air Q reste constamment inférieur au premier seuil de débit $Q_1$. Si à un moment du calcul de la première intégrale $I_1$, le débit massique d'air Q vient à dépasser le premier seuil $Q_1$, ce calcul est immédiatement interrompu, et le procédé reprend au début de l'étape 100. Sinon, le calcul de la première intégrale $I_1$ se poursuit jusqu'à la fin de la durée de calcul T, et l'étape 100 se termine quand ce calcul a abouti, c'est-à-dire qu'il est arrivé à son terme sans interruption.

Après la fin de l'étape 100, le procédé se poursuit par une étape 200 de calcul d'une intégrale temporelle $I_2$ de la pression de suralimentation $P_{sural}$ en mode de suralimentation naturelle, pendant la même durée de calcul T que la première intégrale temporelle $I_1$ de pression atmosphérique, selon l'équation :

$$I_2 = \int_T P_{sural} * dt$$

Cette étape 200 commence quand le calculateur 24 détermine que la suralimentation entre dans le mode de suralimentation naturelle (décrit à la figure 2) sans que la compression de l'air puisse être négligée. Cela est réalisé quand les deux conditions suivantes sont respectées simultanément :

- 1e condition : le débit massique Q d'air (mesuré par le débitmètre 5) est supérieur à un second seuil de débit $Q_2$ strictement supérieur au premier seuil de débit $Q_1$ ; et
- 2e condition : la pression de l'air dans le collecteur d'admission $P_{coll}$ (mesurée par le capteur de pression 17) est inférieure à un seuil de pression dépendant du régime N du moteur (correspondant à la courbe 25 de la figure 2).

L'intégration de la pression de suralimentation $P_{sural}$ se poursuit tant que les 1e et 2e conditions précédentes sont respectées. Si à un moment du calcul de l'intégrale $I_2$ de pression de suralimentation, l'une des deux conditions au moins vient à ne pas être respectée, ce calcul est immédiatement interrompu, et le procédé reprend au début de l'étape 200. Sinon, le calcul de l'intégrale $I_2$ de pression de suralimentation se poursuit jusqu'à la fin de la durée de calcul T. L'étape 200 se termine quand ce calcul a abouti, c'est-à-dire qu'il s'est arrivé à son terme sans interruption.

Le procédé de diagnostic se poursuit par une première étape de test 300 au cours de laquelle le calculateur détermine la durée T' qui a séparé la fin du calcul de la première intégrale de pression atmosphérique $I_1$ qui a abouti, du début du calcul de l'intégrale de pression de suralimentation $I_2$ qui a abouti.

Si cette durée T' est supérieure à un seuil de durée $T_s$, la première étape de test 300 fait reprendre le procédé de diagnostic au début de l'étape 100. Dans le cas contraire, le procédé se poursuit par une étape 400 de calcul d'une seconde intégrale temporelle $I_3$ de pression atmosphérique $P_{atm}$, pendant la durée de calcul T, selon l'équation :

$$I_3 = \int_T P_{atm} * dt$$

Comme pour l'étape 100, cette étape 400 commence quand le calculateur 24 détermine que le débit massique Q d'air (mesuré par le débitmètre 5) est inférieur au premier seuil de débit $Q_1$, en dessous duquel le turbocompresseur 2 ne permet quasiment pas de comprimer l'air admis, l'énergie cédée à la turbine 19 par les gaz d'échappement étant négligeable. La pression atmosphérique $P_{atm}$ est à nouveau assimilée à la pression de suralimentation $P_{sural}$, et déterminée par le capteur de pression de suralimentation 14.

L'intégration de la pression atmosphérique $P_{atm}$ se poursuit tant que le débit massique d'air Q reste constamment inférieur au premier seuil de débit $Q_1$. Si à un moment du calcul de la seconde intégrale $I_3$, le débit massique d'air Q vient à dépasser le premier seuil $Q_1$, ce calcul est immédiatement interrompu, et le procédé reprend au début de l'étape 400. Sinon, le calcul de la seconde intégrale $I_3$ se poursuit jusqu'à la fin de la durée de calcul T, et l'étape 400 se termine quand ce calcul a abouti, c'est-à-dire qu'il est arrivé à son terme sans interruption.

Le procédé de diagnostic se poursuit par une deuxième étape de test 500 au cours de laquelle le calculateur détermine la durée T" qui a séparé la fin du calcul de l'intégrale de pression de suralimentation $I_2$ qui a abouti, du début du calcul de la seconde intégrale de

pression atmosphérique $I_3$ qui a abouti.

Si cette durée T" est supérieure à un seuil de durée $T_s$, la deuxième étape de test 500 fait reprendre le procédé de diagnostic au début de l'étape 100. Dans le cas contraire, le procédé se poursuit par une troisième étape de test 600 au cours de laquelle la première et la seconde intégrales de pression atmosphérique $I_1$,$I_3$ sont comparées entre elles. Cette étape 600 a pour objet de s'assurer que les conditions extérieures de déroulement du procédé de diagnostic restent globalement constantes sur toute sa durée, de manière à ne pas fausser le résultat. Par exemple, l'altitude ne doit pas varier trop rapidement, ce qui exclut notamment les cas de figure où le véhicule roule sur une forte pente à la montagne.

A l'étape 600, on compare la différence entre la première intégrale de pression atmosphérique $I_1$ et la seconde intégrale de pression atmosphérique $I_3$ par rapport à un seuil d'écart S. Si cette différence est supérieure au seuil d'écart S, le procédé reprend au début de l'étape 100. Dans le cas contraire, le procédé se poursuit par une étape 700 de calcul de deux critères de diagnostic $C_1$,$C_2$.

Le premier critère de diagnostic $C_1$ est égal à la différence entre :

- l'intégrale temporelle de pression de suralimentation $I_2$ ; et
- la moyenne arithmétique de la première et de la seconde intégrales temporelles de pression atmosphérique $I_1$,$I_3$

selon l'équation :

$$C_1 = I_2 - \tfrac{1}{2}(I_1+I_3)$$

Le second critère de diagnostic $C_2$ est égal au rapport entre :

- l'intégrale temporelle de pression de suralimentation $I_2$, divisée par
- la moyenne arithmétique de la première et de la seconde intégrales temporelles de pression atmosphérique $I_1$,$I_3$ selon l'équation :

$$C_2 = I_2 / [\ \tfrac{1}{2}(I_1+I_3)\ ]$$

Le procédé de diagnostic se poursuit par une étape de diagnostic 800 dans laquelle on compare le premier critère de diagnostic $C_1$ avec un premier seuil de diagnostic Si et le second critère de diagnostic $C_2$ avec un second seuil de diagnostic $S_2$.

Si l'un des deux critères $C_1$,$C_2$ au moins est inférieur au seuil de diagnostic $S_1$,$S_2$ correspondant, l'étape de diagnostic 800 oriente le procédé vers une étape de diagnostic de défaillance 900, c'est-à-dire une étape d'alerte 900 dans laquelle le conducteur du véhicule est averti de la défaillance de la suralimentation, par exemple par l'allumage d'un voyant au tableau de bord du véhicule.

Dans le cas contraire, aucune alerte n'est transmise, et le procédé de diagnostic reprend au début de l'étape 100. On dispose ainsi d'un procédé de diagnostic embarqué qui fonctionne en continu, et en mode de régulation naturelle du moteur 1.

Par exemple, la durée de calcul T des intégrales $I_1$,$I_2$,$I_3$ de pression atmosphérique et de pression de suralimentation est sensiblement égale à 3 secondes, et le seuil de durée $T_s$ entre les calculs des différentes intégrales $I_1$,$I_2$,$I_3$ est inférieur à 10 secondes.

Avantageusement, le seuil d'écart S d'intégrale de pression atmosphérique est inférieur à 60 mbar*s lorsque la durée de calcul T des intégrales est égale à 3 secondes, c'est-à-dire qu'en moyenne sur une durée de calcul de 3 secondes, la pression atmosphérique $P_{atm}$ ne varie pas de plus de 20 millibars entre les étapes 100 et 400 du procédé de diagnostic.

Avantageusement, le premier seuil de diagnostic $S_1$ est compris entre 100 et 150 mbar*s, et le second seuil de diagnostic S2 est compris entre 1,02 et 1,06 , pour une durée de calcul T des intégrales égal à 3 secondes, et pour une pression atmosphérique sensiblement constante et égale à 1013 mbar, c'est-à-dire égale à la pression normale au niveau de la mer. Ces seuils peuvent être indexés sur l'altitude, c'est-à-dire sur la valeur de pression atmosphérique mesurée par exemple au début de l'étape 100 du procédé, et stockés sous forme d'une cartographie dans une mémoire du calculateur 24.

Les seuils de débit $Q_1$,$Q_2$ peuvent être prédéterminés par des essais. Ils dépendent de la nature du moteur 1 et du turbocompresseur 2. Notamment, leurs valeurs doivent être d'autant plus grandes que la cylindrée du moteur 1 est élevée et que l'inertie du turbocompresseur 2 est forte.

Le procédé de diagnostic selon l'invention présente de nombreux avantages. Contrairement aux procédés connus, il permet de diagnostiquer le fonctionnement de la suralimentation d'un moteur 1 lorsque celui-ci est dans un mode de suralimentation naturelle, c'est-à-dire en dehors du mode de régulation de la suralimentation en boucle fermée (par la vanne waste-gate 22).

En outre, sa précision est très bonne, car toutes les mesures de pression atmosphérique $P_{atm}$ et de pression de suralimentation $P_{sural}$ sont faites par un seul capteur de pression de suralimentation 14, ce qui permet de s'affranchir de dispersions de mesure entre capteurs, et car on s'assure d'autre part que les conditions extérieures de déroulement du procédé de diagnostic, notamment l'altitude, restent sensiblement constantes.

## Revendications

1. Procédé de diagnostic d'un moteur à combustion interne (1) suralimenté équipé d'un turbocompresseur (2) à géométrie fixe comprenant un compresseur (7) traversé par l'air admis dans le circuit d'admission du moteur (1), et une turbine (19) liée en rotation au compresseur (7) par un arbre commun (23) et traversée par des gaz d'échappement du moteur (1) dans le circuit d'échappement du moteur (1), ledit moteur (1) étant associé à :

   - un boîtier-papillon (13) pour faire varier la section de passage de l'air admis dans le circuit d'admission du moteur (1) ; et
   - une vanne waste-gate (22) montée en parallèle de la turbine (19) dans le circuit d'échappement du moteur (1) pour faire varier la proportion des gaz d'échappement du moteur (1) traversant la turbine (19),

   **CARACTERISE EN CE QU'**
   il comporte :

   - une étape (100) de calcul d'une première intégrale temporelle ($I_1$) d'une mesure de la pression atmosphérique ($P_{atm}$) pendant une durée de calcul (T) ;
   - une étape (200) de calcul d'une intégrale temporelle ($I_2$) d'une mesure de la pression de suralimentation ($P_{sural}$) pendant ladite durée de calcul (T) ;
   - une étape (400) de calcul d'une seconde intégrale temporelle ($I_3$) d'une mesure de la pression atmosphérique ($P_{atm}$) pendant ladite durée de calcul (T) ;
   - une étape (700) de calcul de deux critères de diagnostic ($C_1,C_2$) dépendant de la première intégrale temporelle ($I_1$) de la pression atmosphérique ($P_{atm}$), de l'intégrale temporelle ($I_2$) de la pression de suralimentation ($P_{sural}$) et de la seconde intégrale temporelle (13) de la pression atmosphérique ($P_{atm}$) ;
   - une étape (800) de comparaison du premier critère de diagnostic ($C_1$) avec un premier seuil de diagnostic ($S_1$), et de comparaison du second critère de diagnostic ($C_2$) avec un second seuil de diagnostic (S2) ; et
   - une étape de diagnostic de défaillance (900) quand un des deux critères de diagnostic ($C_1,C_2$) au moins est inférieur à son seuil de diagnostic associé ($S_1,S_2$).

2. Procédé selon la revendication 1, dans lequel la pression atmosphérique ($P_{atm}$) pour le calcul de la première et de la deuxième intégrale temporelle ($I_1,I_3$) de la pression atmosphérique ($P_{atm}$) est mesurée par un capteur de pression de suralimentation (14) implanté dans le circuit d'admission du moteur (1) en aval du compresseur (7).

3. Procédé selon l'une quelconque des revendications 1 ou 2, dans lequel pendant la durée de calcul (T) de la première et de la deuxième intégrale temporelle ($I_1,I_3$) de la pression atmosphérique ($P_{atm}$), le débit massique (Q) d'air admis est inférieur à un premier seuil de débit (Q1).

4. Procédé selon l'une quelconque des revendications précédentes, dans lequel la pression de suralimentation ($P_{sural}$) pour le calcul de l'intégrale temporelle ($I_2$) de la pression de suralimentation est mesurée par le même capteur (14) que la pression atmosphérique ($P_{atm}$) pour le calcul de la première et de la deuxième intégrale temporelle ($I_1,I_3$) de la pression atmosphérique ($P_{atm}$).

5. Procédé selon l'une quelconque des revendications précédentes, dans lequel pendant la durée de calcul (T) de l'intégrale temporelle ($I_2$) de la pression de suralimentation, le débit massique (Q) d'air admis est supérieur à un second seuil de débit ($Q_2$) supérieur au premier seuil de débit ($Q_1$).

6. Procédé selon l'une quelconque des revendications précédentes, dans lequel pendant la durée de calcul (T) de l'intégrale temporelle ($I_2$) de la pression de suralimentation, la pression de l'air ($P_{coll}$) dans un collecteur d'admission (16) du moteur (1) est inférieure à un seuil de dépendant du régime (N) du moteur (1).

7. Procédé selon la revendication 6, dans lequel pendant la durée de calcul (T) de l'intégrale temporelle (12) de la pression de suralimentation, la pression de collecteur d'admission ($P_{coll}$) est régulée en boucle ouverte par l'ouverture ($\alpha$) du boîtier-papillon (13), et dans lequel la vanne waste-gate (22) est fermée.

8. Procédé selon l'une quelconque des revendications précédentes, dans lequel l'étape (100) de calcul de la première intégrale temporelle ($I_1$) de la pression atmosphérique ($P_{atm}$) précède l'étape (200) de calcul de l'intégrale temporelle ($I_2$) de la pression de suralimentation ($P_{sural}$), et dans lequel l'étape (200) de calcul de l'intégrale temporelle ($I_2$) de la pression de suralimentation ($P_{sural}$) précède l'étape (400) de calcul de la seconde intégrale temporelle ($I_3$) de la pression atmosphérique ($P_{atm}$).

9. Procédé selon l'une quelconque des revendications précédentes, dans lequel les deux critères de diagnostic ($C_1,C_2$) sont calculés si la différence entre la première intégrale de pression atmosphérique ($I_1$) et la seconde intégrale de pression atmosphérique

($I_3$) est inférieure à un seuil d'écart (S).

10. Procédé selon l'une quelconque des revendications précédentes, dans lequel le premier critère de diagnostic ($C_1$) est calculé comme égal à la différence entre :

- l'intégrale temporelle de pression de suralimentation ($I_2$) et
- la moyenne arithmétique de la première et de la seconde intégrales temporelles de pression atmosphérique ($I_1, I_3$).

11. Procédé selon l'une quelconque des revendications précédentes, dans lequel le second critère de diagnostic ($C_2$) est égal au rapport de :

- l'intégrale temporelle de pression de suralimentation ($I_2$), divisée par
- la moyenne arithmétique de la première et de la seconde intégrales temporelles de pression atmosphérique ($I_1, I_3$).

12. Moteur à combustion interne (1) suralimenté équipé d'un turbocompresseur (2) à géométrie fixe comprenant un compresseur (7) traversé par l'air admis dans le circuit d'admission du moteur (1), et une turbine (19) liée en rotation au compresseur (7) par un arbre commun (23) et traversée par des gaz d'échappement du moteur (1) dans le circuit d'échappement du moteur (1), pour la mise en oeuvre du procédé selon la revendication 1,
**CARACTERISE EN CE QU'**
il est associé à :

- un boîtier-papillon (13) pour faire varier la section de passage de l'air admis dans le circuit d'admission du moteur (1) ; et
- une vanne waste-gate (22) montée en parallèle de la turbine (19) dans le circuit d'échappement du moteur (1) pour faire varier la proportion des gaz d'échappement du moteur (1) traversant la turbine (19).

**Patentansprüche**

1. Verfahren zur Diagnose eines aufgeladenen Verbrennungsmotors (1), der mit einem Turbolader (2) mit festgelegter Geometrie ausgestattet ist, der einen Auflader (7), der von der in den Ansaugkreis des Motors (1) angesaugten Luft durchquert wird, und eine Turbine (19) enthält, die in Drehung mit dem Auflader (7) durch eine gemeinsame Welle (23) verbunden ist und von Abgasen des Motors (1) im Abgaskreis des Motors (1) durchquert wird, wobei der Motor (1) verbunden ist mit:

- einem Drosselklappengehäuse (13), um den Strömungsquerschnitt der in den Ansaugkreis des Motors (1) angesaugten Luft zu variieren; und
- einem Wastegate-Ventil (22), das mit der Turbine (19) im Abgaskreis des Motors (1) parallelgeschaltet ist, um den Anteil der die Turbine (19) durchquerenden Abgase des Motors (1) zu variieren,

**dadurch gekennzeichnet, dass** es aufweist:

- einen Schritt (100) der Berechnung eines ersten zeitlichen Integrals ($I_1$) einer Messung des Atmosphärendrucks ($P_{atm}$) während einer Berechnungsdauer (T);
- einen Schritt (200) der Berechnung eines zeitlichen Integrals ($I_2$) einer Messung des Ladedrucks ($P_{sural}$) während der Berechnungsdauer (T) ;
- einen Schritt (400) der Berechnung eines zweiten zeitlichen Integrals ($I_3$) einer Messung des Atmosphärendrucks ($P_{atm}$) während der Berechnungsdauer (T);
- einen Schritt (700) der Berechnung von zwei Diagnosekriterien ($C_1, C_2$), die vom ersten zeitlichen Integral ($I_1$) des Atmosphärendrucks ($P_{atm}$), vom zeitlichen Integral ($I_2$) des Ladedrucks ($P_{sural}$) und vom zweiten zeitlichen Integral ($I_3$) des Atmosphärendrucks ($P_{atm}$) abhängen;
- einen Schritt (800) des Vergleichs des ersten Diagnosekriteriums ($C_1$) mit einer ersten Diagnoseschwelle ($S_1$) und des Vergleichs des zweiten Diagnosekriteriums ($C_2$) mit einer zweiten Diagnoseschwelle (S2); und
- einen Schritt der Störfalldiagnose (900), wenn mindestens eines der zwei Diagnosekriterien ($C_1, C_2$) niedriger als seine zugeordnete Diagnoseschwelle ($S_1, S_2$) ist.

2. Verfahren nach Anspruch 1, wobei der Atmosphärendruck ($P_{atm}$) zur Berechnung des ersten und des zweiten zeitlichen Integrals ($I_1, I_3$) des Atmosphärendrucks ($P_{atm}$) von einem Ladedrucksensor (14) gemessen wird, der im Ansaugkreis des Motors (1) hinter dem Auflader (7) eingesetzt ist.

3. Verfahren nach einem der Ansprüche 1 oder 2, wobei während der Berechnungsdauer (T) des ersten und des zweiten zeitlichen Integrals ($I_1, I_3$) des Atmosphärendrucks ($P_{atm}$) der Massendurchsatz (Q) angesaugter Luft niedriger als eine erste Durchsatzschwelle (Q1) ist.

4. Verfahren nach einem der vorhergehenden Ansprüche, wobei der Ladedruck ($P_{sural}$) für die Berechnung des zeitlichen Integrals ($I_2$) des Ladedrucks vom glei-

chen Sensor (14) gemessen wird wie der Atmosphärendruck ($P_{atm}$) für die Berechnung des ersten und des zweiten zeitlichen Integrals ($I_1$, $I_3$) des Atmosphärendrucks ($P_{atm}$).

5. Verfahren nach einem der vorhergehenden Ansprüche, wobei während der Berechnungsdauer (T) des zeitlichen Integrals ($I_2$) des Ladedrucks der Massendurchsatz (Q) angesaugter Luft höher ist als eine zweite Durchsatzschwelle ($Q_2$) höher als die erste Durchsatzschwelle ($Q_1$).

6. Verfahren nach einem der vorhergehenden Ansprüche, wobei während der Berechnungsdauer (T) des zeitlichen Integrals ($I_2$) des Ladedrucks der Druck der Luft ($P_{coll}$) in einer Ansaugleitung (16) des Motors (1) niedriger als eine Schwelle ist, die von der Drehzahl (N) des Motors (1) abhängt.

7. Verfahren nach Anspruch 6, wobei während der Berechnungsdauer (T) des zeitlichen Integrals ($I_2$) des Ladedrucks der Ansaugleitungsdruck ($P_{coll}$) durch die Öffnung ($\alpha$) des Drosselklappengehäuses (13) in offener Schleife geregelt wird, und wobei das Wastegate-Ventil (22) geschlossen ist.

8. Verfahren nach einem der vorhergehenden Ansprüche, wobei der Schritt (100) der Berechnung des ersten zeitlichen Integrals ($I_1$) des Atmosphärendrucks ($P_{atm}$) vor dem Schritt (200) der Berechnung des zeitlichen Integrals ($I_2$) des Ladedrucks ($P_{sural}$) liegt, und wobei der Schritt (200) der Berechnung des zeitlichen Integrals ($I_2$) des Ladedrucks ($P_{sural}$) vor dem Schritt (400) der Berechnung des zweiten zeitlichen Integrals ($I_3$) des Atmosphärendrucks ($P_{atm}$) liegt.

9. Verfahren nach einem der vorhergehenden Ansprüche, wobei die zwei Diagnosekriterien ($C_1$, $C_2$) berechnet werden, wenn die Differenz zwischen dem ersten Atmosphärendruckintegral ($I_1$) und dem zweiten Atmosphärendruckintegral ($I_3$) größer ist als eine Abweichungsschwelle (S).

10. Verfahren nach einem der vorhergehenden Ansprüche, wobei das erste Diagnosekriterium ($C_1$) berechnet wird als gleich der Differenz zwischen:

- dem zeitlichen Ladedruckintegral ($I_2$) und
- dem arithmetischen Mittel des ersten und des zweiten zeitlichen Atmosphärendruckintegrals ($I_1$, $I_3$).

11. Verfahren nach einem der vorhergehenden Ansprüche, wobei das zweite Diagnosekriterium ($C_2$) gleich dem Verhältnis ist:

- des zeitlichen Ladedruckintegrals ($I_2$), dividiert durch

- das arithmetische Mittel der ersten und zweiten zeitlichen Atmosphärendruckintegrale ($I_1$, $I_3$).

12. Aufgeladener Verbrennungsmotor (1), der mit einem Turbolader (2) mit festgelegter Geometrie ausgestattet ist, der einen Auflader (7), der von der im Ansaugkreis des Motors (1) angesaugten Luft durchquert wird, und eine Turbine (19) enthält, die mit dem Auflader (7) durch eine gemeinsame Welle (23) in Drehung verbunden ist und von Abgasen des Motors (1) im Abgaskreis des Motors (1) durchquert wird, zur Durchführung des Verfahrens nach Anspruch 1, **dadurch gekennzeichnet, dass** er verbunden ist mit:

- einem Drosselklappengehäuse (13), um den Strömungsquerschnitt der in den Ansaugkreis des Motors (1) angesaugten Luft zu variieren; und
- einem Wastegate-Ventil (22), das mit der Turbine (19) im Abgaskreis des Motors (1) parallelgeschaltet ist, um den Anteil der die Turbine (19) durchquerenden Abgase des Motors (1) zu variieren.

**Claims**

1. Diagnostics method for a supercharged internal combustion engine (1) equipped with a fixed-geometry turbocharger (2) comprising a compressor (7) through which the air admitted to the intake circuit of the engine (1) passes, and a turbine (19) rotationally connected to the compressor (7) by a common shaft (23) and through which exhaust gases from the engine (1) pass in the exhaust circuit of the engine (1), said engine (1) being associated with:

- a throttle valve (13) for varying the bore section for the air admitted to the intake circuit of the engine (1); and
- a wastegate valve (22) mounted in parallel with the turbine (19) in the exhaust circuit of the engine (1) in order to vary the proportion of exhaust gases from the engine (1) passing through the turbine (19),

**CHARACTERIZED IN THAT**
it comprises:

- a step (100) of calculating a first integral with respect to time ($I_1$) of a measurement of the atmospheric pressure ($P_{atm}$) during a calculation time (T);
- a step (200) of calculating an integral with respect to time ($I_2$) of a measurement of the boost pressure ($P_{boost}$) during said calculation time (T);

- a step (400) of calculating a second integral with respect to time ($I_3$) of a measurement of the atmospheric pressure ($P_{atm}$) during said calculation time (T);

- a step (700) of calculating two diagnostics criteria ($C_1$, $C_2$) dependent on the first integral with respect to time ($I_1$) of the atmospheric pressure ($P_{atm}$), on the integral with respect to time ($I_2$) of the boost pressure ($P_{boost}$) and on the second integral with respect to time (13) of the atmospheric pressure ($P_{atm}$) ;

- a step (800) of comparing the first diagnostics criterion ($C_1$) with a first diagnostics threshold ($S_1$) and of comparing the second diagnostics criterion ($C_2$) with a second diagnostics threshold (S2); and

- a step (900) of diagnosing a fault when one of the two diagnostics criteria ($C_1$, $C_2$) at least is below its associated diagnostics threshold ($S_1$, $S_2$).

2. Method according to Claim 1, in which the atmospheric pressure ($P_{atm}$) for calculating the first and second integral with respect to time ($I_1$, $I_3$) of the atmospheric pressure ($P_{atm}$) is measured by a boost pressure sensor (14) installed in the intake circuit of the engine (1) downstream of the compressor (7).

3. Method according to either one of Claims 1 and 2, in which during the time (T) spent calculating the first and second integral with respect to time ($I_1$, $I_3$) of the atmospheric pressure ($P_{atm}$), the mass flow rate (Q) of air admitted is below a first flow rate threshold (Q1).

4. Method according to any one of the preceding claims, in which the boost pressure ($P_{boost}$) for calculating the integral with respect to time ($I_2$) of the boost pressure is measured by the same sensor (14) as the atmospheric pressure ($P_{atm}$) for calculating the first and second integral with respect to time ($I_1$, $I_3$) of the atmospheric pressure ($P_{atm}$).

5. Method according to any one of the preceding claims, in which during the time (T) spent calculating the integral with respect to time ($I_2$) of the boost pressure, the mass flow rate (Q) of air admitted is above a second flow rate threshold ($Q_2$) higher than the first flow rate threshold ($Q_1$).

6. Method according to any one of the preceding claims, in which during the time (T) spent calculating the integral with respect to time ($I_2$) of the boost pressure, the pressure ($P_{man}$) of the air in an intake manifold (16) of the engine (1) is below a threshold dependent on the speed (N) of the engine (1).

7. Method according to Claim 6, in which during the time (T) spent calculating the integral with respect to time (12) of the boost pressure, the intake manifold pressure ($P_{man}$) is regulated by open-loop control using the openness ($\alpha$) of the throttle valve (13) and in which the wastegate valve (22) is closed.

8. Method according to any one of the preceding claims, in which the step (100) of calculating the first integral with respect to time ($I_1$) of the atmospheric pressure ($P_{atm}$) precedes the step (200) of calculating the integral with respect to time ($I_2$) of the boost pressure ($P_{boost}$), and in which the step (200) of calculating the integral with respect to time ($I_2$) of the boost pressure ($P_{boost}$) precedes the step (400) of calculating the second integral with respect to time ($I_3$) of the atmospheric pressure ($P_{atm}$).

9. Method according to any one of the preceding claims, in which the two diagnostics criteria ($C_1$, $C_2$) are calculated if the difference between the first integral of atmospheric pressure ($I_1$) and the second integral of atmospheric pressure ($I_3$) is below a difference threshold (S).

10. Method according to any one of the preceding claims, in which the first diagnostics criterion ($C_1$) is calculated as being equal to the difference between:

    - the integral with respect to time of boost pressure ($I_2$) and
    - the arithmetic mean of the first and second integrals with respect to time of atmospheric pressure ($I_1$, $I_3$).

11. Method according to any one of the preceding claims, in which the second diagnostics criterion ($C_2$) is equal to the ratio of:

    - the integral with respect to time of boost pressure ($I_2$) divided by
    - the arithmetic mean of the first and second integrals with respect to time of atmospheric pressure ($I_1$, $I_3$).

12. Supercharged internal combustion engine (1) equipped with a fixed-geometry turbocharger (2) comprising a compressor (7) through which the air admitted to the intake circuit of the engine (1) passes, and a turbine (19) rotationally connected to the compressor (7) by a common shaft (23) and through which exhaust gases from the engine (1) pass, in the exhaust circuit of the engine (1), for implementing the method according to Claim 1,
**CHARACTERIZED IN THAT**
it associated with:

    - a throttle valve (13) for varying the bore section for the air admitted to the intake circuit of the engine (1); and

- a wastegate valve (22) mounted in parallel with the turbine (19) in the exhaust circuit of the engine (1) in order to vary the proportion of exhaust gases from the engine (1) passing through the turbine (19).

**Fig. 1**

**Fig. 2**

$$I_1 = \int_T P_{atm} \cdot dt$$ — 100

$$I_2 = \int_T P_{sural} \cdot dt$$ — 200

non $\quad T' < T_S$ ? — 300

oui

$$I_3 = \int_T P_{atm} \cdot dt$$ — 400

non $\quad T'' < T_S$ ? — 500

oui

non $\quad I_1 - I_3 < S$ ? — 600

oui

$$C_1 = I_2 - \frac{1}{2}(I_1 + I_3)$$

$$C_2 = \frac{I_2}{\frac{1}{2}(I_1 + I_3)}$$

— 700

non $\quad C_1 < S_1 \text{ ou } C_2 < S_2$ ? — 800

oui

Alerte — 900

## Fig. 3

**EP 2 935 828 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2923262 B1